**Europäisches Patentamt**

**European Patent Office**

**Office européen des brevets**

(11) Publication number: **0 205 276**
**A2**

# (12) EUROPEAN PATENT APPLICATION

(21) Application number: **86303996.2**

(22) Date of filing: **27.05.86**

(51) Int. Cl.⁴: **D 04 H 3/04**

(30) Priority: **30.05.85 GB 8513609**

(43) Date of publication of application:
**17.12.86 Bulletin 86/51**

(84) Designated Contracting States:
**AT BE CH DE FR GB IT LI LU NL SE**

(71) Applicant: **Composite Developments Limited**
**Castle Chambers 43 Castle Street**
**Liverpool L2 9TL(GB)**

(72) Inventor: **Otty, Malcolm**
**9 Sycamore Rise Shaw**
**Newbury Berkshire RG13 2LZ(GB)**

(74) Representative: **McNeight, David Leslie et al,**
**McNeight & Lawrence Regent House Heaton Lane**
**Stockport Cheshire SK4 1BS(GB)**

(54) **Making reinforced resinous sheet material.**

(57) A reinforced resinous sheet material is made by clamping a sheet of warp threads and drawing said sheet from a supply of warp threads by moving the clamp means a predetermined distance while assembling the sheet and a filler (such as weftwise extending threads and/or a fibre layer such as a cross-folded card web) into a composite in which the filler is held by the clamp means and/or the warp threads so as not substantially to effect any weftwise distortion of the warp threads, and impregnating with resin the composite assembly while held in said clamp means. The impregnation can be effected by a vacuum-pressure technique. The impregnated assembly can be moved on in like manner, while the first clamp means reciprocate back to clamp a fresh section of the warp threads, so as to make a continuous, impregnated assembly.

0205276

## MAKING REINFORCED RESINOUS SHEET MATERIAL

This invention relates to reinforced resinous material.

Conventionally reinforced resinous materials have comprised a woven, usually glass fibre, reinforcement impregnated with resin. A so-called "pre-preg" is produced comprising a single impregnated layer in which the resin is dried so that it can be handled, but not cured. Multiple such pre-pregs are assembled together (sometimes with "dry" layers interleaved) and hot-pressed to cure the resin under pressure and bond the layers together to achieve the required thickness.

For a number of reasons, however, a woven substrate is not ideal. It is in many cases - and especially if made of glass fibre - difficult to impregnate, glass fabrics requiring considerable chemical processing and cleaning and drying before they can be properly wet by resin, and all fabrics requiring considerable exposure to the wet resin before adequate penetration and elimination of dry spots are achieved. The conventional impregnation process involves passing the woven fabric through the liquid resin and elevating the fabric vertically in a tall tower at a speed corresponding to that at which the resin, but for the upward movement of the fabric, would run down the woven fabric surface so that the surface resin effectively remains stationary while the fabric moves by and gradually absorbs it. In order to achieve a reasonable throughput rate the towers must be several tens of metres high.

It will be appreciated that the resin pick-up by the fabric will depend upon a number of a factors over which the impregnator does not always have complete control. Among these factors may be included the weight and quality of the fabric as well as the material of which it is made, and the nature and thoroughness of the chemical treatment, cleaning and drying processes to which the fabric has been subjected before impregnation - not to mention the time which has elapsed since those processes were carried out and the atmospheric conditions under which the fabric has been held meanwhile which might tend to allow the fibres - particularly glass fibres - to pick up further moisture. The type and age of the resin and the temperature and the length of time at which it has been kept at such temperature during the treatment will also affect the viscosity of the resin and the rate at which surface resin runs down the fabric surface and gets absorbed. To alleviate this latter problem, solvented resin is universally used, which, however, is expensive in terms of lost solvent, which is not usually recovered, or in the capital and operating cost of recovery plant if it is.

The present invention provides new methods and apparatus for the manufacture of reinforced resinous sheet materials which avoid these problems.

The invention comprises a method for making a reinforced resinous sheet material comprising clamping a sheet of warp threads and drawing said sheet from a supply of warp threads by moving the clamp means a predetermined distance while assembling the sheet and a filler into a composite in which the filler is held by the clamp means and/or the warp threads so as not substantially to effect any weftwise distortion of the warp threads, and impregnating with resin the composite assembly while held in said clamp means.

Said filler may comprise weftwise extending threads, which need not be woven with said warp threads - they may be cross-laid from edge to edge of said sheet of warp threads and forwarded therewith on moving grippers, becoming released from said grippers, as by being cut, after becoming held by the warp threads.

Said filler may comprise at least one fibre layer such as a cross-folded card web. A fibre layer may be sandwiched between two sheets of warp threads, and at least one layer of warp threads may be sandwiched between two fibre layers.

The filler may serve to cushion brittle warp and weft threads against fracture during hot pressing, and especially during hot pressing multiple sheets into a board, but may also serve to pick up resin and carry it around warp and/or weft threads which may themselves not be adequately wetted by liquid resin, in addition, of course, to acting as a general reinforcing agent.

The warp sheet and the filler may be stitched together before impregnation, or they may be needled together if the filler comprises a fibre layer, care of course being taken, as by correctly placing the needles, not to break or distort the positions of warp threads and weft threads, if present.

Warp threads and filler materials will naturally be chosen with a view to their performance in the finished sheet material but by the methods described herein even inherently expensive aramid fibres such as Nomex (TM) and Kevlar (TM) which combine strength with heat resistance can be used to manufacture sheet and board materials actually less expensive than conventionally produced glass fibre based products - even than the least expensive of such products - but with far superior mechanical, thermal and electrical characteristics.

When said clamp means have moved said predetermined distance, a second clamp member thereof may take the composite from a first clamp member thereof which returns to said supply of warp threads and, during the movement of said first clamp member said predetermined distance to form said composite, said second clamp member may then also move through a like distance to place the previously formed length of composite in impregnator and press means in which the composite is impregnated and pressed into a reinforced resinous sheet material. The composite is preferably impregated by a vacuum - pressure technique.

The invention also comprises apparatus for making a reinforced resinous sheet material comprising clamp means for a sheet of warp threads and actuator means moving said clamp means a predetermined distance from a supply of warp threads, and assembler means for assembling the said sheet and a filler into a composite in which the filler is held by the clamp means and/or the warp threads so as not substantially to effect any weftwise distortion of the warp threads, and resin impregnating means in which said composite can be held for impregnation by said clamp means.

Said assembler means may comprise weft thread introducing means such for example as cross-laying means and cooperating edge grippers moving with the warp thread sheet. Said cross-laying means may be adapted to cross-lay a plurality of threads on each crossing. The apparatus may further comprise release means for releasing said weft threads from said grippers after becoming held by the warp threads, such, for example, as cutting means for cutting the weft threads.

Said assembler means may comprise means feeding a fibre filler, such for example as roller means, for example, as nip roller means.

Said assembler means may comprise stitching means for stitching together said warp sheet and said filler, and may comprise needling means for needling said warp sheet and filler.

Said clamp means may comprise first and second clamp members of which the second clamp member takes the composite from the first clamp member after the first clamp member has moved said predetermined distance, said first and second clamp members being adapted for simultaneous movement along axially spaced portions of a feed path along which said composite is assembled, each portion being of said predetermined distance and of returning independently, the first clamp member to the warp thread supply while the second clamp member holds the composite, and the second to the point at which it takes the composite from the first after the composite has been impregnated and pressed, the said second clamp member traversing impregnating and pressing means to introduce unimpregnated composite thereto.

The invention also comprises reinforced resinous sheet material made by a method or by apparatus as described, and sheet or board material formed from multiple layers of such material pressure bonded together.

Embodiments of apparatus and methods for making a reinforced resinous sheet material according to the invention will now be described with reference to the accompanying drawings, in which:-

Figure 1    is a diagrammatic plan view of an apparatus;

Figure 2    is a diagrammatic side elevation of an apparatus as illustrated in Figure 1;

Figure 3    is a cross-section through a sheet material made using an apparatus as illustrated in Figure 2;

Figure 4    is a diagrammatic side elevation of another apparatus;

Figure 5    is a cross-section through a sheet material made using an apparatus as illustrated in Figure 4; and

Figure 6    is a plan view of another apparatus.

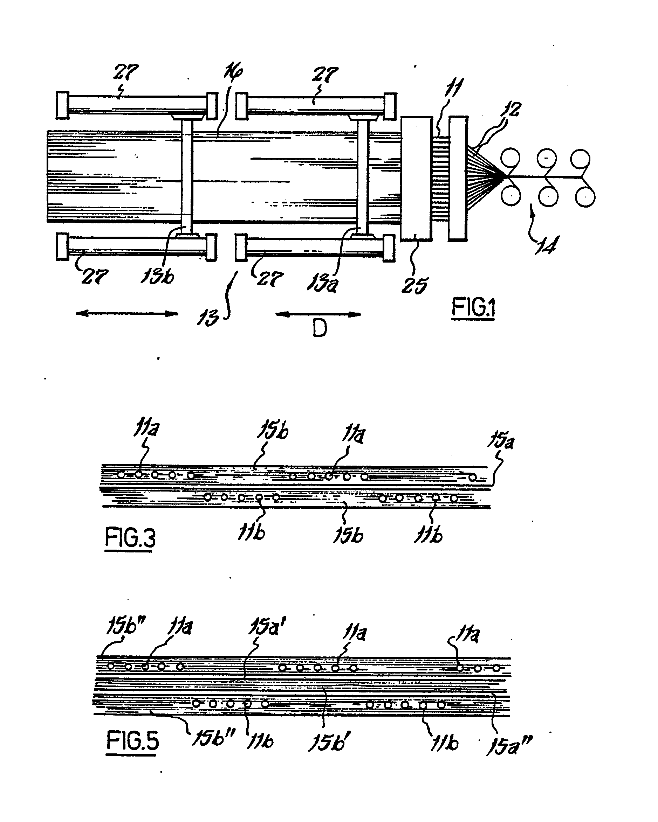

Figures 1 to 6 illustrate methods and apparatus for making a reinforced resinous sheet material, in which a sheet 11 of warp threads 12 is clamped in clamp means 13 and drawn from a supply 14 of warp threads by moving the clamp means 13 a predetermined distance D while assembling the sheet 11 and a filler 15 into a composite 18 in which the filler 15 is held by the clamp means 13 and/or the warp threads 12 so as not substantially to effect any weftwise distortion of the warp threads, and the composite assembly 16 is impregnated with resin while held in said clamp means 13.

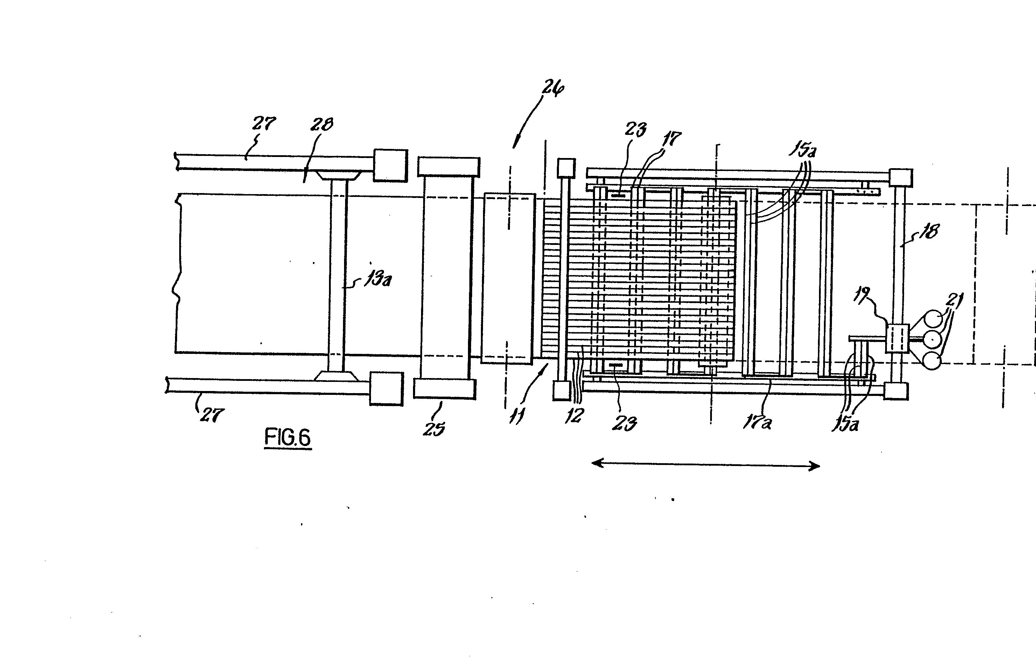

The filler 15 comprises weftwise extending threads 15a, which are not, however, woven with said warp threads 12, but are cross-laid from edge to edge of said sheet 11 of warp threads 12 and forwarded therewith on moving grippers 17 (see Figure 6). A weftwise extending thread cross-laying unit is shown in Figure 6 and comprises a track 18 on which a carriage 19 moves carrying three bobbins 21 supplying weft threads 15a. The carriage 19 reciprocates on the track 18 paying out three parallel weft threads 15a together and dropping them over the grippers 17 which are on chains 17a like stenter chains.

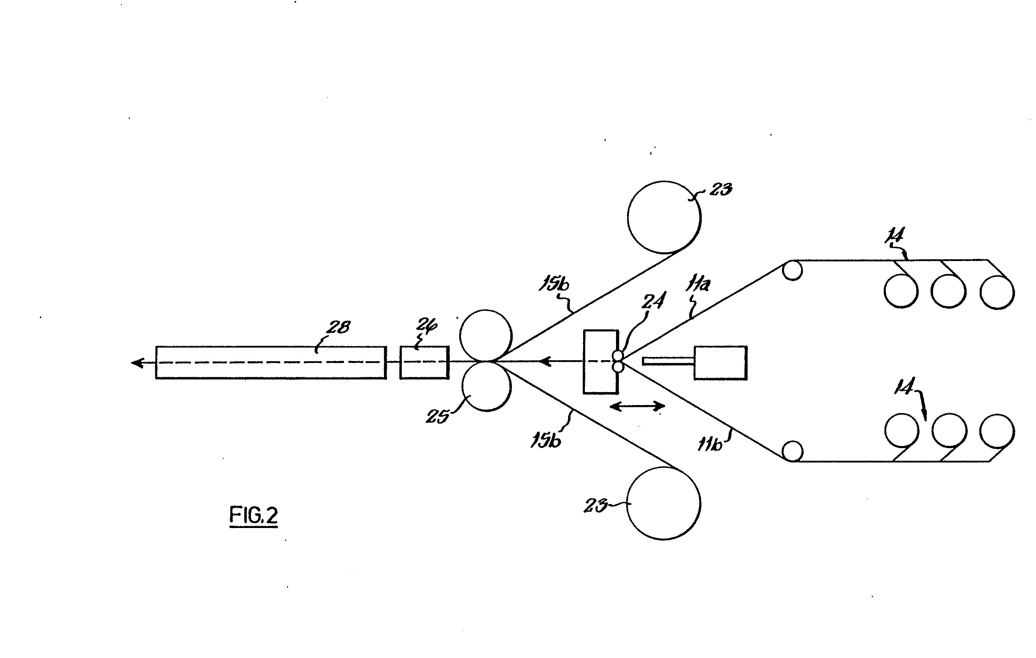

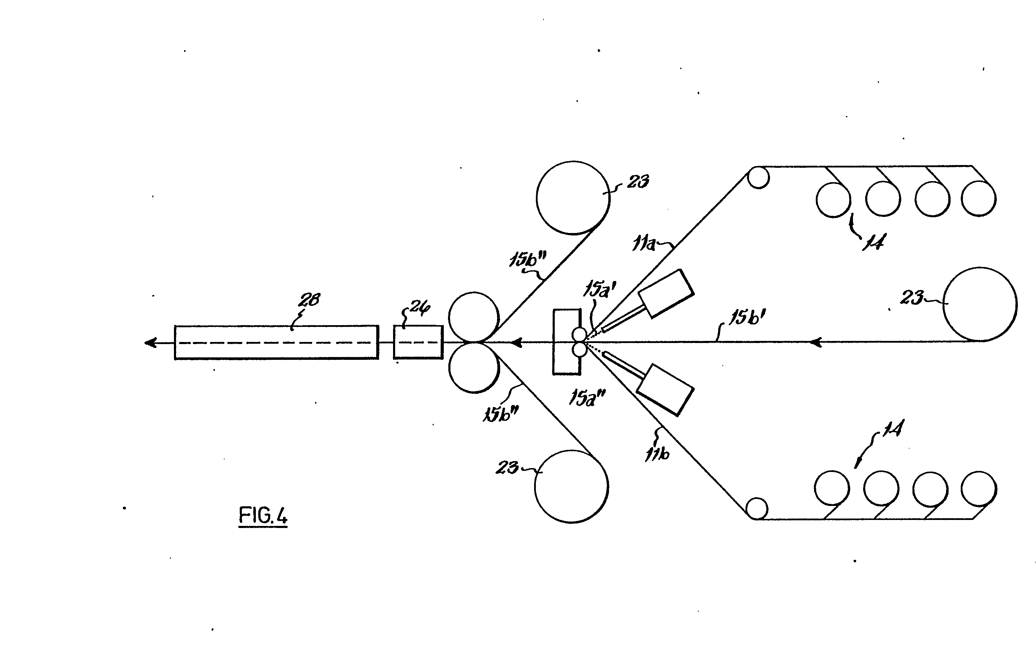

The weft threads 15a are assembled on the grippers 17 in advance of being brought together with the warp sheet 11 and are so brought together at a warp feed roller 22. There are in fact upper and lower warp sheets 11a, 11b fed from separate, upper and lower creels (Figures 2 and 4) and the upper warp set alternates with the lower warp set, as best seen in Figures 3 and 5 in groups of warp threads so that at any one weftwise position only a group of upper or only a group of warp threads of the sheets 11a, 11b is present.

In this way, the weft threads 15a are held between the two warp sheets 11a, 11b once these have been brought together to sandwich the weft threads 15a. Once so constrained, the weft threads 15a can be cut by a sharp blade or hot wire means 23 at the edges of the composite so as to release the weft threads 15a from the grippers 17.

The filler 15 also comprises fibre layers 15b. Figure 2 illustrates the assembly of the composite shown in Figure 3 from the central weft layer 15a, upper and lower warp sheets 11a, 11b, and outer fibre layers 15b. The fibre layers 15b are supplied from rolled-up cross-folded card webs 23. The warp threads 11 and the weft threads 15a are brought together in the nip of feed rollers 24 while the outer fibre layers 15b are brought together with the thread core between further nip feed rollers 25. After the rollers 25 the composite passes through a stitching or needling unit 26 at which the layers are stitched together in any convenient way - as by spaced weftwise-extending rows of interlock or chain stitches, or by warpwise-extending rows of chain or tricot stitches.

Figure 4 illustrates how a composite as shown in Figure 5 is formed from a central fibre layer 15b', weft thread layers 15a', 15a" either side of said central fibre layer 15b', warp thread layers 11a, 11b either side of the weft/fibre sandwich, and outer layers 15b" of fibre.

Said clamp means 13 comprise first and second clamp members 13a, 13b (Figures 1 and 6) of which the second clamp member 13b takes the composite from the first clamp member 13a after the first clamp member 13a has moved said predetermined distance D. The clamp members 13a, 13b may be air-actuated upper and lower clamp beams gripping the composite when pneumatically closed together and movable in rodless pneumatic cylinders 27 (see Figure 1). When the second clamp member 13b has taken the composite, the first clamp member 13a releases its grip thereon and returns by means of said rodless cylinders 27 to the warp sheet supply - the rollers 25 as illustrated, supplying not just the warp sheet but the entire assembled composite. The clamp member 13a then grips the composite at said supply, and both clamp members 13a, 13b move simultaneously to draw further composite from the supply.

Further clamp members may be located downstream each adapted for movement in relation to the members 13a, 13b, so as to move the sheet intermittently over the whole of its travel. Or intermittently operating rollers might be used instead

When both clamp members 13a, 13b have moved, together, through the predetermined distance D, a length of assembled and stitched or needled composite is located in impregnating and pressing means 28 where it is impregnated and pressed so as to be self supporting and capable of being fed or pulled to an oven for drying and a cut-off and stack area. The clamp member 13b can be released after the impregnating and pressing stages have been completed and returned to grip the next length held up to this point by the first clamp member 13a.

The movement of the clamp members is not necessarily uniform - it may, for example, take place in small discrete steps if an interlock sewing machine for example, is used to effect the stitching together of the layers of the composite.

The impregnating means comprise vacuum - pressure means in which the fabric is held in a sealed chamber and subjected to at least one vacuum step (to remove entrapped air) and a liquid resin impregnation step, under pressure to encourage the resin to move into the interstices in the composite.

Whilst the invention has been particularly described with reference to an embodiment in which weft threads are sandwiched between outer layers of warp threads, it is to be understood that the warp threads can instead be sandwiched between layers of weft threads. A needling operation can secure the weft to the filling which in turn holds the warp, all prior to impregnation.

CLAIMS

1.  A method for making a reinforced resinous sheet material comprising clamping a sheet of warp threads and drawing said sheet from a supply of warp threads by moving the clamp means a predetermined distance while assembling the sheet and a filler into a composite in which the filler is held by the clamp means and/or the warp threads so as not substantially to effect any weftwise distortion of the warp threads, and impregnating with resin the composite assembly while held in said clamp means.

2.  A method according to claim 1, in which said filler comprises weftwise extending threads.

3.  A method according to claim 2, in which said weftwise extending threads are not woven with said warp threads.

4.  A method according to claim 3, in which said weftwise extending threads are cross-laid from edge to edge of said sheet of warp threads and forwarded therewith on moving grippers.

5.  A method according to claim 4, in which said weftwise extending threads are released from said grippers after becoming held by the warp threads.

6. A method according to claim 5, in which said weftwise extending threads are cut to release them from said grippers.

7. A method according to any one of claims 1 to 6, in which said filler comprises at least one fibre layer.

8. A method according to claim 7, in which said fibre layer comprises a cross-folded card web.

9. A method according to claim 7 or claim 8, in which said fibre layer is sandwiched between two sheets of warp threads.

10. A method according to any one of claims 7 to 9, in which at least one layer of warp threads is sandwiched between two fibre layers.

11. A method according to any one of claims 1 to 10, in which the warp sheet and filler are stitched together before impregnation.

12. A method according to any one of claims 1 to 11, in which the warp sheet and filler are needled before impregnation.

13.    A method according to any one of claims 1 to 12, in which when said clamp means have moved said predetermined distance a second clamp member thereof takes the composite from a first clamp member thereof which returns to said supply of warp threads and, during the movement of said first clamp member said predetermined distance to form said composite, said second clamp member also moves through a like distance to place the previously formed length of composite in impregnator and press means in which the composite is impregnated and pressed into a reinforced resinous sheet material.

14.    A method according to any one of claims 1 to 13, in which the composite is impregnated by a vacuum-pressure technique.

15.    Apparatus for making a reinforced resinous sheet material comprising clamp means for a sheet of warp threads and actuator means moving said clamp means a predetermined distance from a supply of warp threads, and assembler means for assembling the said sheet and a filler into a composite in which the filler is held by the clamp means and/or the warp threads so as not substantially to effect any weftwise distortion of the warp threads, and resin impregnating means in which said composite can be held for impregnation by said clamp means.

16. Apparatus according to claim 15, said assembler means comprising weft thread introducing means.

17. Apparatus according to claim 16, said weft thread introducing means comprising cross-laying means and cooperating edge grippers moving with the warp thread sheet.

18. Apparatus according to claim 17, said cross-laying means being adapted to cross-lay a plurality of threads on each crossing.

19. Apparatus according to claim 17 or claim 18, further comprising release means for releasing said weft threads from said grippers after becoming held by the warp threads.

20. Apparatus according to claim 19, said release means comprising cutting means cutting the weft threads.

21. Apparatus according to any one of claims 15 to 20, said assembler means comprising means feeding a fibre filler.

22.     Apparatus according to any one of claims 15 to 21, said assembler means comprising roller means.

23.     Apparatus according to claim 22, said roller means comprising nip roller means.

24.     Apparatus according to any one of claims 15 to 23, said assembler means comprising stitching means for stitching together said warp sheet and said filler.

25.     Apparatus according to any one of claims 15 to 24, said assembler means comprising needling means for needling said warp sheet and filler.

26.     Apparatus according to any one of claims 15 to 25, said clamp means comprising first and second clamp members of which the second clamp member takes the composite from the first clamp member after the first clamp member has moved said predetermined distance, said first and second clamp members being adapted for simultaneous movement along axially spaced portions of a feed path along which said composite is assembled each portion being of said predetermined distance and of returning independently, the first clamp member to the warp sheet supply while the second clamp member holds the composite, and the second to the point at which it takes the composite from the first after the composite has been impregnated and pressed, the said second clamp member traversing impregnating and pressing means to introduce unimpregnated composite thereto.

27.    Apparatus according to any one of claims 15 to 26, said impregnating means comprising vacuum-pressure impregnating means.

28.    Reinforced resinous sheet material made by a method according to any one of claims 1 to 14 or by apparatus according to any one of claims 15 to 27.

29.    Reinforced resinous sheet material according to claim 28, formed from multiple layers pressure-bonded together.

FIG.1

FIG.3

FIG.5

FIG.2

FIG.4

FIG.6